(19) Europäisches Patentamt / European Patent Office / Office européen des brevets

(11) **EP 3 381 222 B1**

(12) **FASCICULE DE BREVET EUROPEEN**

(45) Date de publication et mention de la délivrance du brevet:
**08.01.2020 Bulletin 2020/02**

(21) Numéro de dépôt: **16795350.4**

(22) Date de dépôt: **15.11.2016**

(51) Int Cl.:
*H04W 16/10* ⁽²⁰⁰⁹·⁰¹⁾    *H04W 4/02* ⁽²⁰¹⁸·⁰¹⁾

(86) Numéro de dépôt international:
**PCT/EP2016/077708**

(87) Numéro de publication internationale:
**WO 2017/089177 (01.06.2017 Gazette 2017/22)**

(54) **PROCEDE DE CONFIGURATION D'UNE PASSERELLE**

VERFAHREN ZUR GATEWAY-KONFIGURATION

GATEWAY CONFIGURATION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.11.2015 FR 1561345**

(43) Date de publication de la demande:
**03.10.2018 Bulletin 2018/40**

(73) Titulaire: **Sagemcom Energy & Telecom SAS 92500 Rueil-Malmaison (FR)**

(72) Inventeurs:
- **TEBOULLE, Henri**
  **92500 Rueil Malmaison (FR)**
- **MORO, Paolo**
  **92500 Rueil Malmaison (FR)**

(74) Mandataire: **Cabinet Le Guen Maillet 3, impasse de la Vigie CS 71840 35418 Saint-Malo Cedex (FR)**

(56) Documents cités:
**EP-A1- 0 544 095       EP-A1- 0 709 983
EP-A1- 1 806 856       WO-A1-2004/112325
US-A1- 2009 042 593**

- **"LoRa MAC Specification;LTN(14)011004_LoRa_MAC_Specifications", ETSI DRAFT; LTN(14)011004_LORA_MAC_SPECIFICATIONS, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG, 16 janvier 2014 (2014-01-16), pages 1-23, XP014159442,**

**Description**

L'invention concerne un procédé de configuration de paramètres de communication d'une passerelle dans un réseau sans fil à grande portée et permettant une faible consommation d'énergie, un dispositif et un système mettant en œuvre le procédé.

L'Internet se transforme progressivement en un réseau étendu, appelé « Internet des objets », reliant toutes sortes d'objets devenus connectables. De nouveaux besoins en termes de réseaux sont alors apparus, et notamment des besoins en réseaux sans fil ayant une plus grande couverture que des réseaux cellulaires classiques et permettant de limiter une consommation d'énergie des équipements connectés. Parmi ces réseaux sans fil à grande portée et permettant une faible consommation d'énergie (« Low Power Wide Area Network (LPWAN) » en terminologie anglo-saxonne), on peut citer des réseaux basés sur la technologie LoRa (marque déposée) («Long Range » en terminologie anglo-saxonne). La technologie LoRa opère sur des bandes de fréquences connues sous l'appellation « *Bande ISM* » (Industrie, Science et Médical) comprenant des bandes de fréquences pouvant être utilisées librement pour des applications industrielles, scientifiques et médicales. La technologie LoRa est basée sur une technologie d'étalement de spectre permettant d'obtenir des communications bas débit ayant une bonne robustesse dans une bande ISM particulièrement bruitée.

Le document "LoRa MAC specification", ETSI draft, publié le 16 janvier 2014 décrit la spécification de la couche MAC du système LoRa.

Le document EP0709983 divulgue un procédé d'allocation de fréquences par un contrôleur de réseau en prenant en compte la distance entre les stations de base, exprimée en indices de distance.

Un réseau basé sur la technologie LoRa (appelé « réseau LoRa » par la suite) est composé de stations de base ou passerelles (« gateways » en terminologie anglo-saxonne) généralement placées sur des points hauts afin de couvrir une grande zone géographique. Les passerelles sont aptes à détecter des messages émis dans leur zone par des équipements ou terminaux (« endpoints » en terminologie anglo-saxonne) et de les remonter vers au moins un serveur centralisé (« LoRa Network Server (LNS) » en terminologie anglo-saxonne) qui les traitera.

Dans un réseau LoRa un équipement n'est pas rattaché à une passerelle. Toutes les passerelles à portée d'un terminal peuvent servir de relai entre ledit terminal et le serveur centralisé. Si une passerelle parvient à décoder un message émis par un terminal (voie montante), alors elle le retransmet au serveur centralisé pour traitement. Si un message doit être transmis d'un serveur centralisé audit terminal (voie descendante), c'est le serveur centralisé qui se chargera de déterminer quelle passerelle doit relayer le message.

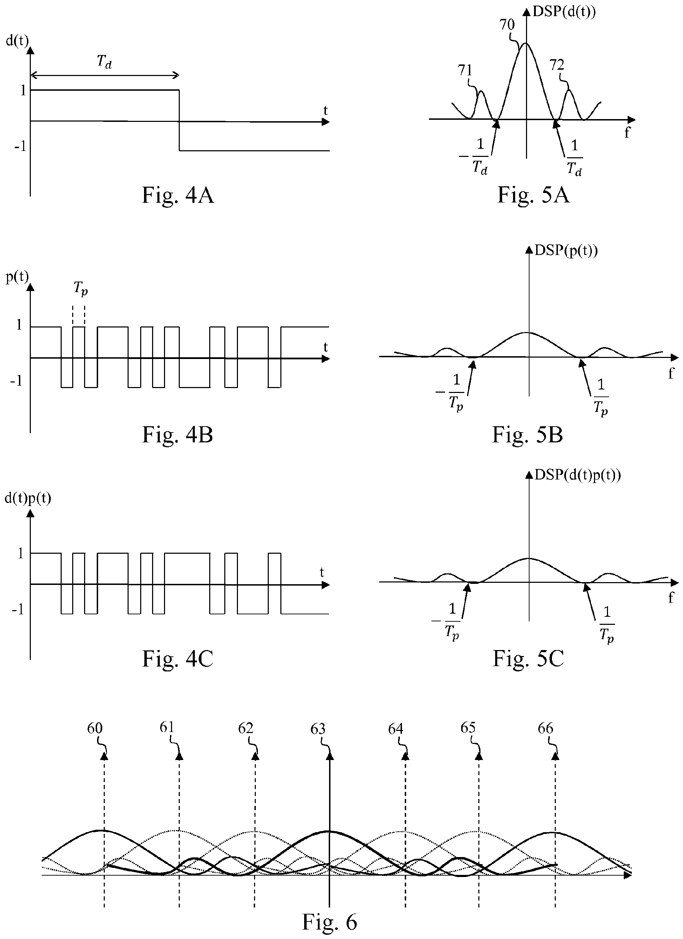

Les Figs. 4A, 4B, 4C, 5A, 5B et 5C illustrent la technologie d'étalement de spectre appliquée à un signal de données binaire.

La **Fig. 4A** illustre schématiquement un signal *d(t)* de données binaires sur lequel doit être appliqué un étalement de spectre. Dans l'exemple de la Fig. 4A, le signal *d(t)* prend des valeurs de tension « 1 » ou « -1 », la valeur de tension « 1 » indiquant un « 1 » binaire, la valeur de tension « -1 » indiquant un « 0 » binaire. Le signal *d(t)* est de période bit $T_d$.

La **Fig. 4B** illustre schématiquement un signal *p(t)* binaire pseudo aléatoire utilisé dans l'étalement de spectre. Dans l'exemple de la Fig. 4B, le signal *p(t)* prend des valeurs de tension « 1 » ou « -1 », la valeur de tension « 1 » indiquant un « 1 » binaire, la valeur de tension « -1 » indiquant un « 0 » binaire. Le signal *p(t)* est de période bit $T_p$ avec la période bit $T_p$ très inférieure à la période bit $T_d$. On note que le signal *p(t)* est parfois appelé *signal d'étalement.*

La **Fig. 4C** illustre schématiquement un signal obtenu après application d'un étalement de spectre au signal de données binaire *d(t).* Lors de l'étalement de spectre, le signal *d(t)* est combiné au signal d'étalement *p(t)* : une combinaison d'une valeur de tension « 1 » avec une valeur de tension « 1 » donne une valeur de tension « 1 » ; une combinaison d'une valeur de tension « 1 » avec une valeur de tension « -1 » donne une valeur de tension « -1 » ; une combinaison d'une valeur de tension « -1 » avec une valeur de tension « -1 » donne une valeur de tension « 1 ». Le signal résultant de l'étalement de spectre, noté d(t)p(t) est de période bit $T_p$ lorsque la période bit $T_d$ est un multiple de la période bit $T_p$.

La **Fig. 5A** illustre schématiquement une densité spectrale de puissance du signal de données binaire *d(t)*. La densité spectrale de puissance, notée *DSP(d(t)),* prend la forme d'un lobe principal 70, centré sur une fréquence centrale et ayant une largeur de bande de fréquences de $\dfrac{2}{T_d}$ , entouré de lobes secondaires (71, 72) ayant une largeur de bande de fréquences de $\dfrac{1}{T_d}$.

La **Fig. 5B** illustre schématiquement une densité spectrale de puissance du signal binaire pseudo-aléatoire *p(t).* La densité spectrale de puissance, notée *DSP(p(t)),* prend la forme d'un lobe principal, centré sur une fréquence centrale et ayant une largeur de bande de fréquences de $\dfrac{2}{T_p}$ , entouré de lobes secondaires ayant une largeur de bande de fréquences de $\frac{1}{T_p}$.

La **Fig. 5C** illustre schématiquement une densité spectrale de puissance du signal de données binaire sur lequel a été appliqué l'étalement de spectre. La densité spectrale de puissance, notée *DSP(d(t)p(t)),* prend la forme d'un lobe principal centré sur une fréquence centrale et ayant une largeur de bande de fréquences de $\frac{2}{T_p}$, entouré de lobes secondaires ayant une largeur de bande de fréquences de $\frac{1}{T_p}$. On note qu'après application de l'étalement de spectre sur le signal de données binaire *d(t),* le signal *d(t)p(t)* conserve la même énergie que le signal *d(t)* mais réparti sur une bande de fréquences plus grande.

La **Fig. 6** illustre schématiquement les densités spectrales de puissance d'un ensemble de canaux disponibles dans un réseau LoRa. La technologie LoRa définit un ensemble de canaux, chaque canal étant associé à une fréquence centrale d'un ensemble de fréquences centrales de la bande ISM utilisables dans les réseaux LoRa, dit *ensemble de fréquences centrales LoRa.* L'ensemble de fréquences centrales LoRa est représenté dans le tableau TAB 1 ci-dessous, chaque fréquence étant exprimée en MHz.

TAB 1:

| 863.1 | 864.1 | 865.1 | 866.1 | 867.1 | 868.1 | 869.05 |
|---|---|---|---|---|---|---|
| 863.3 | 864.3 | 865.3 | 866.3 | 867.3 | 868.3 | 869.525 |
| 863.5 | 864.5 | 865.5 | 866.5 | 867.5 | 868.5 | |
| 863.7 | 864.7 | 865.7 | 866.7 | 867.7 | 868.85 | |
| 863.9 | 864.9 | 865.9 | 866.9 | 867.9 | | |

Chaque canal est associé à une densité spectrale de puissance centrée sur une des fréquences centrales de l'ensemble de fréquences centrales LoRa. Les fréquences centrales 60 à 66 représentées dans la Fig. 6 sont des fréquences centrales consécutives de l'ensemble de fréquences centrales LoRa. Comme on peut le voir dans la Fig. 6, les densités spectrales de puissance associées à deux fréquences centrales consécutives, par exemple les fréquences centrales 63 et 64, se chevauchent largement. Il existe donc un risque non négligeable pour qu'une communication dans une bande spectrale centrée sur une première fréquence centrale, soit affectée par des interférences provoquées par des communications dans des bandes spectrales centrées sur des secondes fréquences centrales proches de la première fréquence centrale. Par exemple, une communication dans une bande spectrale centrée sur la fréquence centrale 63, serait affectée par des interférences provoquées par une communication dans une bande spectrale centrée sur la fréquence centrale 62 ou la fréquence centrale 64.

Un tel problème d'interférence peut se produire lorsqu'une pluralité de passerelles proches géographiquement n'ont pas été configurées judicieusement en termes de fréquences centrales, mais aussi en termes de puissance (ou niveau) d'émission ou encore en termes de modulations utilisées. En effet, si ces deux passerelles utilisent des bandes spectrales centrées sur des fréquences centrales proches, leurs communications ont des chances non négligeables d'interférer.

Par ailleurs, il est connu que la bande ISM possède des caractéristiques (taux d'erreurs, rapport signal à bruit, bande passante, ...) variant très rapidement et imprédictibles. Une transmission de données se faisant sous forme de trames dans un réseau LoRa, il n'est pas rare qu'une période de variation des caractéristiques d'un réseau LoRa soit de l'ordre d'une durée d'une ou quelques trames.

Il est souhaitable de pallier ces inconvénients de l'état de la technique. Il est notamment souhaitable de proposer une méthode permettant de configurer une passerelle d'un réseau LoRa en prenant en compte une proximité géographique de ladite passerelle avec d'autres passerelles. Il est de plus souhaitable que cette méthode soit suffisamment réactive pour prendre en compte les variations rapides des caractéristiques du réseau LoRa.

Il est par ailleurs souhaitable de proposer une méthode qui soit simple à mettre en œuvre et à faible coût. L'invention concerne un procédé, un système, un programme d'ordinateur et des moyens de stockage comme présentés dans les revendications 1, 7, 8 et 9, respectivement.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un réseau LoRa dans lequel est mise en œuvre l'invention ;

- la Fig. 2A illustre schématiquement un module de traitement compris dans un serveur ;
- la Fig. 2B illustre schématiquement un module de traitement compris dans une passerelle ;
- la Fig. 3A illustre schématiquement un procédé de configuration d'une passerelle selon l'invention;
- la Fig. 3B illustre schématiquement un procédé mis en œuvre par un serveur lors d'une réception de données en provenance d'un terminal;
- la Fig.3C illustre schématiquement une procédure de détermination de paramètres de communication selon l'invention;
- la Fig. 4A illustre schématiquement un signal de données binaire sur lequel doit être appliqué un étalement de spectre;
- la Fig. 4B illustre schématiquement un signal binaire pseudo aléatoire utilisé dans l'étalement de spectre;
- la Fig. 4C illustre schématiquement un signal obtenu après application d'un étalement de spectre au signal de données binaire;
- la Fig. 5A illustre schématiquement une densité spectrale de puissance du signal de données binaire ;
- la Fig. 5B illustre schématiquement une densité spectrale de puissance du signal binaire pseudo-aléatoire ;
- la Fig. 5C illustre schématiquement une densité spectrale de puissance du signal de données binaire sur lequel a été appliqué un étalement de spectre; et,
- la Fig. 6 illustre schématiquement les densités spectrales de puissance d'un ensemble de canaux disponibles dans un réseau LoRa.

L'invention est décrite par la suite dans un contexte de réseau LoRa. L'invention s'applique toutefois dans d'autres contextes pour tous types de réseaux sans fil à grande portée et permettant une faible consommation d'énergie et dans lesquels les communications utilisent la technologie d'étalement de spectre.

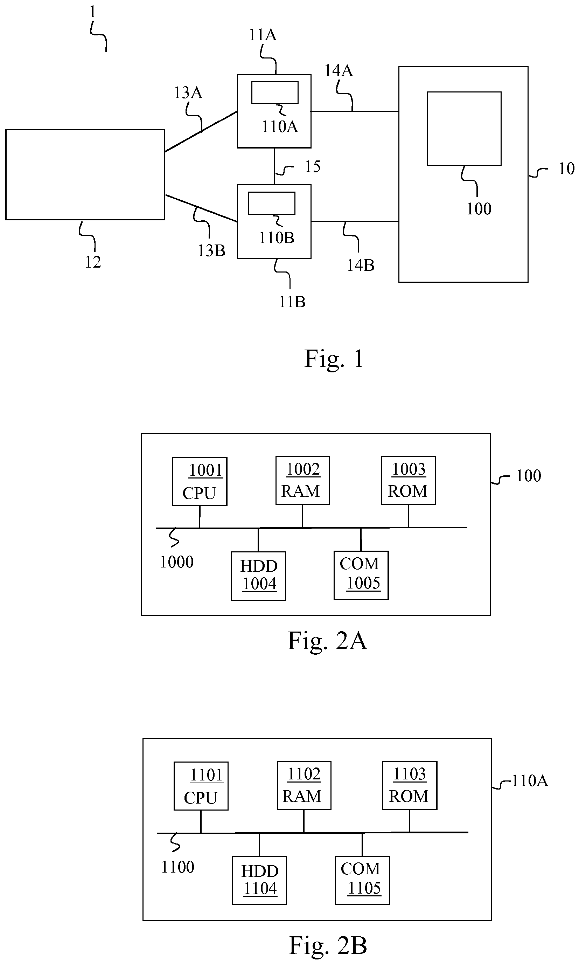

La **Fig. 1** illustre schématiquement un réseau LoRa 1 dans lequel est mise en œuvre l'invention.

Dans l'exemple de la Fig. 1, le réseau LoRa 1 comprend un serveur 10, deux passerelles 11A et 11B et un terminal 12. La passerelle 11A (respectivement la passerelle 11B) communique avec le serveur 10 par l'intermédiaire d'un lien de communication filaire ou sans fil 14A (respectivement 14B). La passerelle 11A (respectivement la passerelle 11B) communique avec le terminal 12 par l'intermédiaire d'un lien de communication sans fil 13A (respectivement 13B).

Le serveur 10 comprend un module de traitement 100. La passerelle 11A (respectivement 11B) comprend un module de traitement 110A (respectivement 110B).

Dans un mode de réalisation, les passerelles 11A et 11B peuvent communiquer entre elles par l'intermédiaire d'un lien de communication sans fil 15. Pour ce faire, chaque passerelle souhaitant communiquer avec une autre passerelle utilise une fonctionnalité offerte par le protocole LoRaWAN qui est de permettre à une passerelle de se faire passer temporairement pour un terminal.

On note que les communications entre les terminaux et les passerelles et les communications entre passerelles d'un réseau LoRa utilisent des trames compatibles avec le protocole LoRaWAN, les trames étant transmises en mode multidiffusion (« broadcast » en terminologie anglo-saxonne). Le document LoRaWAN 1.1 (« draft LoRaWAN 1.1 » en terminologie anglo-saxonne) d'août 2015 définit les communications entre les terminaux et les passerelles d'un réseau LoRa.

On suppose par ailleurs par la suite que les canaux (et donc les fréquences centrales et bandes spectrales) utilisés par les passerelles 11A et 11B dans le réseau 1 pour communiquer avec le terminal 12 sont différents des canaux utilisés par le terminal 12 pour communiquer avec les passerelles 11A et 11B.

La **Fig. 2A** illustre schématiquement un exemple d'architecture matérielle du module de traitement 100 compris dans le serveur 10.

Selon l'exemple d'architecture matérielle représenté à la Fig. 2A, le module de traitement 100 comprend alors, reliés par un bus de communication 1000 : un processeur ou CPU (« Central Processing Unit » en anglais) 1001 ; une mémoire vive RAM (« Random Access Memory » en anglais) 1002; une mémoire morte ROM (« Read Only Memory » en anglais) 1003 ; une unité de stockage telle qu'un disque dur ou un lecteur de support de stockage, tel qu'un lecteur de cartes SD (« Secure Digital » en anglais) 1004 ; au moins une interface de communication 1005 permettant au module de traitement 100 de communiquer avec d'autres modules ou dispositifs. Par exemple l'interface de communication 1005 permet au module de traitement 100 de communiquer avec d'autres modules du serveur 10 ou avec d'autres dispositifs tels que les passerelles 11A et 11B.

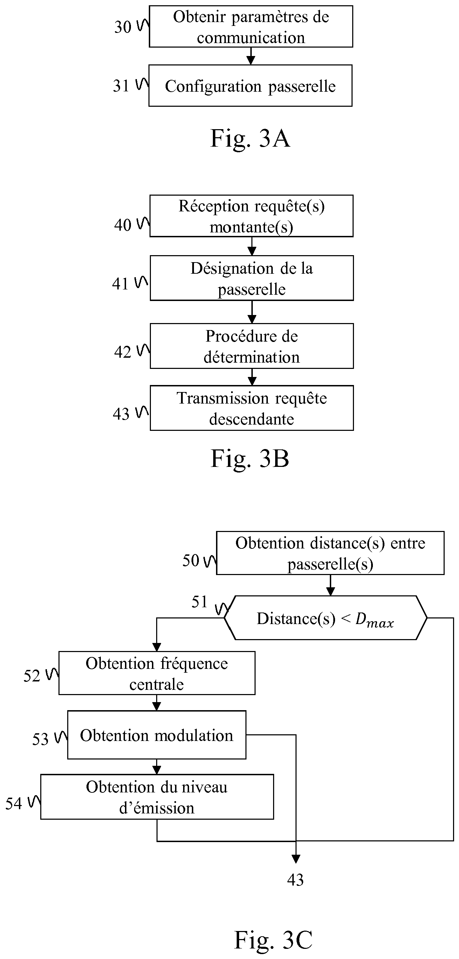

Le processeur 1001 est capable d'exécuter des instructions chargées dans la RAM 1002 à partir de la ROM 1003, d'une mémoire externe (non représentée), d'un support de stockage (tel qu'une carte SD), ou d'un réseau de communication. Lorsque le serveur 10 est mis sous tension, le processeur 1001 est capable de lire de la RAM 1002 des instructions et de les exécuter. Dans un mode de réalisation, ces instructions forment un programme d'ordinateur causant la mise en œuvre complète ou partielle, par le processeur 1001, des procédés décrits ci-après en relation avec les Figs. 3B et 3C.

Les procédés décrits en relation avec les Figs. 3B et 3C peuvent être implémentés sous forme logicielle par exécution d'un ensemble d'instructions par une machine programmable, par exemple un DSP (« Digital Signal Processor » en anglais) ou un microcontrôleur, ou être implémentés sous forme matérielle par une machine ou un composant dédié, par exemple un FPGA (« Field-Programmable Gate Array » en anglais) ou un ASIC (« Application-Specific Integrated Circuit » en anglais).

La **Fig. 2B** illustre schématiquement un exemple d'architecture matérielle du module de traitement 110A compris dans la passerelle 11A. Le module de traitement 110B est identique.

Selon l'exemple d'architecture matérielle représenté à la Fig. 2B, le module de traitement 110A comprend alors, reliés par un bus de communication 1100 : un processeur ou CPU (« Central Processing Unit » en anglais) 1101 ; une mémoire vive RAM (« Random Access Memory » en anglais) 1102 ; une mémoire morte ROM (« Read Only Memory » en anglais) 1103 ; une unité de stockage telle qu'un disque dur ou un lecteur de support de stockage, tel qu'un lecteur de cartes SD (« Secure Digital » en anglais) 1104 ; au moins une interface de communication 1105 permettant au module de traitement 110A de communiquer avec d'autres modules ou dispositifs. Par exemple l'interface de communication 1105 permet au module de traitement 110A de communiquer avec le serveur 10 ou avec la passerelle 11B.

Le processeur 1101 est capable d'exécuter des instructions chargées dans la RAM 1002 à partir de la ROM 1003, d'une mémoire externe (non représentée), d'un support de stockage (tel qu'une carte SD), ou d'un réseau de communication. Lorsque la passerelle 11a est mise sous tension, le processeur 1101 est capable de lire de la RAM 1102 des instructions et de les exécuter. Dans un mode de réalisation, ces instructions forment un programme d'ordinateur causant la mise en œuvre complète ou partielle, par le processeur 1101, des procédés décrits ci-après en relation avec les Figs. 3A et 3C.

Les procédés décrits en relation avec les Figs. 3A et 3C peuvent être implémentés sous forme logicielle par exécution d'un ensemble d'instructions par une machine programmable, par exemple un DSP (« Digital Signal Processor » en anglais) ou un microcontrôleur, ou être implémentés sous forme matérielle par une machine ou un composant dédié, par exemple un FPGA (« Field-Programmable Gate Array » en anglais) ou un ASIC (« Application-Specific Integrated Circuit » en anglais).

La **Fig. 3B** illustre schématiquement un procédé mis en œuvre par un serveur lors d'une réception de données en provenance d'un terminal.

Dans l'exemple de la Fig. 3B, on suppose que le terminal 12 a transmis une trame à destination du serveur 10. Cette trame, dite trame montante, a été transmise en mode multidiffusion de sorte que chaque passerelle à portée du terminal 12 a reçu cette trame montante. Dans l'exemple du réseau LoRa 1, on suppose que les passerelles 11A et 11B reçoivent chaque trame montante transmise par le terminal 12. Lorsqu'une passerelle d'un réseau LoRa reçoit une trame montante destinée à un serveur, elle la décode et insère des données contenues dans cette trame montante dans une requête HTTP (protocole de transfert hypertext, « HyperText Transfer Protocol » en terminologie anglo-saxonne), dite requête HTTP montante, puis transmet cette requête HTTP montante au serveur du réseau LoRa en point à point.

Dans une étape 40, le module de traitement 100 du serveur 10 reçoit au moins une requête HTTP contenant les données contenues dans la trame montante. Dans l'exemple de la Fig. 1, le serveur 10 reçoit donc deux requêtes HTTP montantes, l'une en provenance de la passerelle 11A et l'autre en provenance de la passerelle 11B. Lorsque le module de traitement 100 reçoit les requêtes HTTP montantes, il les traite.

Dans une étape 41, le module de traitement 100 désigne une passerelle parmi les passerelles ayant relayé la trame montante pour relayer des informations représentatives d'une réponse à la trame montante au terminal 12. Pour ce faire, le serveur 10 utilise une procédure de désignation basée, par exemple, sur une comparaison d'informations représentatives d'une qualité de réception mesurées lors de la réception de la trame montante par chaque passerelle ayant relayé la trame montante. Les informations représentatives d'une qualité de réception ainsi mesurées ont été transmises au serveur 10 par les passerelles 11A et 11B, par exemple en insérant ces informations dans les requêtes HTTP montantes dans un format JSON (notation d'objets en langage Javascript : « JavaScript Object Notation » en terminologie anglo-saxonne). Le serveur désigne par exemple la passerelle 11A ayant une qualité de réception supérieure à la passerelle 11B. Dans un mode de réalisation, les informations représentatives d'une qualité de réception comprennent une indication de puissance d'un signal reçu (« Received Signal Strength indication (RSSI) » en terminologie anglo-saxonne), le signal reçu correspondant à la trame montante, et un rapport signal sur bruit (« signal to noise ratio (SNR) » en terminologie anglo-saxonne) mesuré sur ledit signal. La passerelle désignée peut donc, par exemple, être la passerelle associée à la plus haute valeur d'indication de puissance d'un signal reçu, ou à la plus haute valeur de rapport signal sur bruit, ou maximisant une métrique combinant la valeur d'indication de puissance d'un signal reçu et la valeur de rapport signal sur bruit.

Dans une étape 42, le module de traitement 100 met en œuvre une procédure de détermination pour déterminer des paramètres de communications devant être utilisés par la passerelle désignée (ici la passerelle 11A). Nous décrivons la procédure de détermination par la suite en relation avec la Fig. 3C.

Dans une étape 43, le module de traitement 100 transmet une réponse en point à point en direction du terminal 12. Une seule réponse est transmise en direction du terminal 12 pour l'ensemble des requêtes HTTP montantes concernant la même trame montante. Il est à noter que le protocole LoRaWAN permet toutefois de manière programmable de répéter une trame un certain nombre de fois (ce nombre étant typiquement égal à 2, soit 3 transmissions de la même trame au maximum dans ce cas), et ce dans le sens montant et dans le sens descendant, indépendamment. Des informations représentatives de la réponse sont insérées par le serveur 10 dans une requête HTTP, dite requête HTTP descendante, et la requête HTTP descendante est transmise en point à point à la passerelle désignée par le serveur 10. Dans l'exemple de la Fig. 1, la requête HTTP descendante est transmise à la passerelle 11A.

Dans un exemple de mise en œuvre du procédé décrit en relation avec la Fig. 3B, la trame montante transmise par le terminal 12 est une demande de rattachement au réseau LoRa 1. Cette demande, appelée JOIN REQUEST dans le protocole LoRaWAN, est ensuite relayée par chaque passerelle située à portée du terminal 12 (dans l'exemple de la Fig. 1, la trame contenant la demande de rattachement est relayée par les passerelles 11A et 11B) en l'encapsulant dans chaque requête HTTP montante générée. Lorsque le serveur accepte que le terminal 12 rejoigne le réseau LoRa 1, la requête HTTP descendante transmise par le serveur 10 encapsule une trame descendante, appelée JOIN ACCEPT, autorisant le terminal 12 à se rattacher au réseau LoRa 1. La trame descendante est ensuite transmise en mode multidiffusion par la passerelle 11A et le terminal 12 la reçoit.

Lorsqu'il reçoit la requête HTTP descendante transmise par le serveur 10, le module de traitement 110A de la passerelle 11A la décode et applique un procédé décrit ci-après en relation avec la Fig. 3A.

La **Fig. 3A** illustre schématiquement un procédé de configuration d'une passerelle selon l'invention.

Dans une étape 30, le module de traitement 110A obtient des paramètres de communication entre ladite passerelle 11A et ledit terminal 12. Chaque transmission par la passerelle 11A de trames descendantes en direction du terminal 12 suivant l'étape 30 doit utiliser les paramètres obtenus et cela tant que le module de traitement 110A n'obtient pas de nouveaux paramètres de communication. Lorsque, comme indiqué en relation avec l'exemple de la Fig. 3B, le serveur 10 met en œuvre la procédure de détermination (correspondant à l'étape 42), les paramètres de communication ont été déterminés par le module de traitement 100 du serveur 10. Dans ce mode de réalisation, les paramètres de communication sont transmis à la passerelle 11A dans la requête HTTP descendante contenant les informations représentatives d'une réponse.

Dans un mode de réalisation, les paramètres de communications sont insérés dans la requête HTTP descendante dans le format JSON.

Dans un mode de réalisation, les paramètres de communication comprennent une fréquence centrale devant être utilisée par la passerelle 11A.

Dans un mode de réalisation, les paramètres de communication comprennent en outre une modulation et/ou un niveau d'émission devant être utilisés par la passerelle 11A.

Dans une étape 31, le module de traitement 110A configure la passerelle 11A pour que les informations représentatives d'une réponse soient transmises au terminal 12 en utilisant chaque paramètre de communication obtenu.

Dans un mode de réalisation, la passerelle désignée obtient des paramètres de communication pour chaque trame montante transmise par le terminal 12 qu'elle a relayée. Ainsi, la passerelle peut potentiellement obtenir de nouveaux paramètres de communication pour chaque trame descendante qu'elle a à transmettre à un terminal, ce qui assure une très grande réactivité face aux variations rapides des caractéristiques de la bande ISM.

Dans un mode de réalisation, la passerelle désignée obtient des paramètres de communication à intervalles réguliers, par exemple toutes les secondes ou toutes les minutes ou toutes les heures. Une durée de l'intervalle entre deux obtentions de paramètres de communication peut alors être fixe ou adaptée en fonction de statistiques sur la vitesse de variation des caractéristiques de la bande ISM, ce qui permet de réduire un coût calculatoire de la détermination de paramètres de communication.

La **Fig. 3C** illustre schématiquement une procédure de détermination de paramètres de communication selon l'invention.

Comme vu plus haut en relation avec l'étape 42 de la Fig. 3B, dans un mode de réalisation, la procédure de détermination de paramètres de communication est mise en œuvre par le module de traitement 100 du serveur 10.

Dans une étape 50, le module de traitement 100 obtient au moins une information de distance entre la passerelle 11A et au moins une autre passerelle, *i.e.* la passerelle 11B dans le réseau 1. Dans l'exemple de la Fig. 1, le module de traitement 100 obtient une information de distance entre la passerelle 11A et la passerelle 11B.

Dans un mode de réalisation, le module de traitement connaît des informations de géolocalisation de chaque passerelle du réseau 1 et en déduit les distances séparant chaque passerelle du réseau 1 prises deux à deux. Ces informations ont par exemple été obtenues lors de l'installation de ces passerelles et transmises par un installateur au serveur 10. Dans un mode de réalisation, chaque passerelle possède un module de géolocalisation (par exemple un module GPS (« Global Positioning System » en terminologie anglo-saxonne)) et est capable de transmettre au serveur 10 des coordonnées de géolocalisation (longitude, latitude, altitude) qu'elle a mesurées. Ces coordonnées de géolocalisation peuvent par exemple être insérées dans une requête HTTP montante sous format JSON, la requête HTTP montante pouvant être transmise à tout moment par chaque passerelle du réseau 1, par exemple lors de son installation ou sur requête du serveur.

Dans un mode de réalisation dans lequel un réseau LoRa comporte un plus grand nombre de passerelles, le module de traitement 100 pourrait recevoir des informations de distance comprenant une distance entre la passerelle désignée et chaque autre passerelle du réseau LoRa ou une distance entre la passerelle désignée et un ensemble de passerelles voisines de la passerelle désignée dans le réseau LoRa.

Dans une étape 51, le module de traitement 100 compare chaque distance obtenue avec une distance prédéfinie. La distance prédéfinie et une distance telle que deux passerelles situées à une distance inférieure à la distance prédéfinie pourrait perturber mutuellement leurs communications respectives. Lorsqu'au moins une passerelle d'un réseau LoRa est située à une distance de la passerelle désignée inférieure à la distance prédéfinie, le module de traitement 100 détermine lors d'étapes 52, 53 et 54, des paramètres de communication permettant d'assurer une transmission fiable de la passerelle désignée vers le terminal 12 et de minimiser une perturbation par ladite transmission de communications des passerelles du réseau LoRa situées à une distance de la passerelle désignée inférieure à la distance prédéfinie. Dans l'exemple de la Fig. 1, les étapes 52, 53 et 54 sont mises en œuvre lorsque la distance entre la passerelle 11A et la passerelle 11B est inférieure à la distance prédéfinie. Dans un mode de réalisation, la distance prédéfinie est égale à « 200m ».

Comme nous l'avons vu plus haut, les communications dans les réseaux LoRa utilisent la technologie d'étalement de spectre. Chacun des « 31 » canaux définis par la technologie LoRa est associé à une densité spectrale de puissance centrée sur une fréquence centrale. Deux passerelles proches géographiquement peuvent se perturber mutuellement si elles émettent dans des bandes de fréquences proches, c'est-à-dire lorsque leur densité spectrale de puissance ont un recouvrement important. Il est donc préférable que des passerelles proches aient des densités spectrales de puissance ne se recouvrant pas ou peu. Il est possible de contrôler le recouvrement entre les densités spectrales de puissance associées à des passerelles en contrôlant un écart entre leurs fréquences centrales.

Dans l'étape 52, le module de traitement 100 obtient la fréquence centrale reçue par chacune des passerelles situées à une distance de la passerelle désignée inférieure à la distance prédéfinie. Dans un mode de réalisation, chaque requête HTTP montante transmise par une passerelle ayant relayé les données comprises dans la trame montante émise par le terminal 12 comprend une information représentative de la fréquence centrale reçue par ladite passerelle. Par exemple les requêtes HTTP montantes transmises par les passerelles 11A et 11B comprennent respectivement une information représentative de la fréquence centrale reçue par la passerelle 11A et une information représentative de la fréquence centrale reçue par la passerelle 11B. Cette information est par exemple insérée dans chaque requête HTTP montante sous format JSON. Indépendamment, le serveur 10 programmant les fréquences centrales à utiliser par chaque passerelle pour transmettre des trames à chaque terminal du réseau LoRa 1, il sait pertinemment quelle est la dernière fréquence centrale utilisée en émission par chaque passerelle pour communiquer avec chaque terminal.

Par la suite, lors de l'étape 52, le module de traitement 100 sélectionne dans l'ensemble de fréquences centrales LoRa, une fréquence centrale ayant un écart avec les fréquences centrales utilisées par les passerelles situées à une distance de la passerelle désignée inférieure à la distance prédéfinie supérieure à un écart prédéfini. Dans un mode de réalisation, l'écart prédéfini est égal à « 3 » Mhz. Dans l'exemple de la Fig. 1, si la fréquence centrale associée à la passerelle 11B est égale à « 863,1 » Mhz, le module de traitement 100 choisit une fréquence centrale supérieure à « 866,1 » Mhz, ce qui laisse « 15 » fréquences centrales possibles dans l'ensemble de fréquences centrales LoRa.

Optionnellement, il est possible d'agir sur d'autres paramètres de communication que la fréquence centrale. Parmi les paramètres pouvant être ajustés dans une communication LoRa, et en dehors de la fréquence centrale, il est possible d'agir sur une modulation et/ou un niveau d'émission utilisés par la passerelle désignée pour communiquer avec le terminal 12.

Dans un mode de réalisation, la modulation et/ou le niveau d'émission sont déterminés en utilisant les informations représentatives d'une qualité de réception mesurées lors de la réception de la trame montante reçue par la passerelle désignée. Comme nous l'avons vu plus haut, ces informations représentatives d'une qualité de réception comprennent une information représentative d'une indication de puissance d'un signal reçu, représentée par la suite par une valeur *RSSI* et une information de rapport signal sur bruit, représentée par la suite par une valeur *SNR.*

Dans une étape 53, le module de traitement détermine la modulation en sélectionnant parmi un ensemble de modulations, chaque modulation dudit ensemble étant associée à un débit binaire, une sensibilité de réception minimale admissible et un rapport signal sur bruit minimum acceptable, une modulation associée au débit binaire le plus élevé possible et vérifiant chaque critère parmi un premier et un second critères.

La technologie LoRa définit « 7 » modulations possibles que nous avons regroupées dans le tableau TAB 2 ci-dessous.

TAB 2

| Modulation | Débit binaire (Bits/s) | S (sensibilité de réception minimale admissible) (dBm) | A (rapport signal sur bruit minimum acceptable)(dB) |
|---|---|---|---|
| MOD 1 | 50000 | -105 | 7.5 |

(suite)

| Modulation | Débit binaire (Bits/s) | S (sensibilité de réception minimale admissible) (dBm) | A (rapport signal sur bruit minimum acceptable)(dB) |
|---|---|---|---|
| MOD 2 | 5489 | -130 | -7.5 |
| MOD 3 | 3125 | -132.5 | -10 |
| MOD 4 | 1758 | -135 | -12.5 |
| MOD 5 | 977 | -137.5 | -15 |
| MOD 6 | 537 | -140 | -17.5 |
| MOD 7 | 293 | -142.5 | -20 |

Par exemple, la première modulation, MOD 1, est associée à un débit binaire de 50Kbits/s, une sensibilité de réception minimale admissible $S$=-105 dBm, et un rapport signal sur bruit minimal acceptable $A$=7.5 dBm.

Le premier critère est tel que l'information représentative d'une indication de puissance d'un signal reçu $RSSI$ doit être telle que :

$$RSSI \geq (S + C_{RSSI})$$

où $C_{RSSI}$ est une première constante prédéfinie. Dans un mode de réalisation, $C_{RSSI}$ = 25 $dBm$, cette valeur permettant d'avoir une marge suffisante afin de minimiser les risques de retransmission de la trame dues à des variations rapides de perturbations dans la bande ISM, ce qui aurait des conséquences néfastes sur la charge du réseau.

Le second critère est tel que l'information de rapport signal sur bruit $SNR$ doit être telle que :

$$SNR \geq (A + C_{SNR})$$

où $C_{SNR}$ est une deuxième constante prédéfinie. Dans un mode de réalisation, $C_{RSSI}$ = 3 $dB$, cette valeur permettant d'avoir une marge suffisante afin de minimiser les risques de retransmission de la trame dues aux variations rapides des perturbations dans la bande ISM, ce qui aurait des conséquences néfastes sur la charge du réseau. On considère ainsi qu'une transmission avec marge de bruit < 3 $dB$ n'est pas viable.

Lorsqu'une modulation a pu être sélectionnée, le niveau d'émission, représenté par une variable $POWE$, est déterminé lors de l'étape 54 de la manière suivante :

$$POWE = \max(N_{max} - \min((SNR - (A + C_{SNR}), (RSSI - (S + C_{RSSI})), N_{min})$$

où $N_{max}$ est un niveau d'émission maximal prédéfini, $N_{min}$ est un niveau d'émission minimal prédéfini, $min(x,y)$ est une fonction prenant le minimum entre une valeur $x$ et une valeur $y$, $max(x,y)$ est une fonction prenant le maximum entre la valeur $x$ et la valeur $y$. Dans un mode de réalisation $N_{max}$ = 27 $dBm$ et $N_{min}$ = 0 $dBm$, correspondant à des plages de valeurs typiquement utilisées pour des passerelles dans des réseaux LoRa en Europe.

Si aucune modulation ne peut être déterminée, le module de traitement 100 passe directement à l'étape 43. La requête HTTP descendante est transmise sans paramètres de communication relatifs à une modulation et à un niveau d'émission. Lorsque la passerelle désignée reçoit cette requête HTTP descendante, elle ne reconfigure pas ses paramètres de communication relatifs à la modulation et au niveau d'émission et conserve par conséquent une modulation et un niveau d'émission obtenus précédemment. On peut également en variante de ce mode de réalisation appliquer dans ce cas la modulation la plus robuste (ici la modulation MOD 7).

Lorsqu'aucune passerelle du réseau LoRa n'est située à une distance de la passerelle désignée inférieure à la distance prédéfinie, le module de traitement 100 ne détermine pas de nouveaux paramètres de communication et passe directement à l'étape 43. Dans ce cas, la requête HTTP descendante est transmise sans paramètre de communication et la passerelle désignée recevant cette requête HTTP descendante réutilise des paramètres de communication obtenus précédemment. On peut également en variante de ce mode de réalisation appliquer dans ce cas la modulation la plus robuste (*i.e.* MOD 7).

Dans un mode de réalisation, c'est la passerelle désignée (ici la passerelle 11A) par l'intermédiaire de son module de traitement (110A) qui met en œuvre la procédure de détermination décrite en relation avec la Fig. 3C. Dans ce mode de réalisation, le module de traitement 100 du serveur 10 met en œuvre les étapes 40, 41 et 43 décrites en relation avec la Fig. 3B et transmet à la passerelle désignée, une requête HTTP descendante contenant les données représentatives d'une réponse mais ne comprenant pas de paramètres de communication. La passerelle désignée recevant cette requête HTTP descendante, met en œuvre l'étape 42 lors de l'étape 30 et détermine donc elle-même ses paramètres de communication. Dans ce mode de réalisation, l'obtention des distances entre passerelles se base sur des informations échangées entre les passerelles. On suppose ici que les passerelles du réseau LoRa 1 se sont échangé des informations de géolocalisation qu'elles ont mesurées grâce à un module de géolocalisation. Pour mettre en œuvre ces échanges, chaque passerelle se fait passer temporairement pour un terminal et transmet une trame en mode multidiffusion comprenant ses informations de géolocalisation. Chaque passerelle recevant cette trame, extrait les informations de géolocalisation qu'elle contient, détermine une distance la séparant de la passerelle ayant émis cette trame, et stocke ladite distance pour l'utiliser lors de l'étape 50. Ces trames contenant des informations de géolocalisation peuvent être transmises par exemple, lors de l'installation de la passerelle ou à intervalles réguliers.

Dans un mode de réalisation, chaque passerelle du réseau LoRa 1 (ici les passerelles 11A et 11B) met en œuvre la procédure de détermination décrite en relation avec la Fig. 3C indépendamment d'une transmission d'une trame montante par le terminal 12. Cette mise en œuvre de la procédure de détermination peut se faire par exemple à intervalles réguliers. Comme dans le mode de réalisation précédent, dans ce mode de réalisation, l'obtention des distances entre passerelles se base sur des informations de géolocalisation échangées entre les passerelles. Ainsi, dans ce mode de réalisation, lorsqu'une passerelle désignée doit transmettre une trame descendante, elle la transmet avec les derniers paramètres de communication qu'elle a déterminés. Dans ce mode de réalisation, les passerelles du réseau LoRa doivent se répartir les fréquences de l'ensemble de fréquences LoRa entre elles. Pour ce faire, sachant que chaque passerelle d'un réseau LoRa connaît une adresse MAC (Adresse de contrôle d'accès au médium : « MAC (Médium Access Control) Address » en terminologie anglo-saxonne) de chaque autre passerelle du réseau LoRa, les passerelles peuvent se répartir les fréquences centrales en fonction de leur adresse MAC. Par exemple, lorsque deux passerelles sont séparées d'une distance inférieure à la distance prédéfinie, la passerelle associée à une valeur d'adresse MAC la plus basse prend une fréquence centrale plus haute que l'autre passerelle.

Dans un mode de réalisation, les étapes 50, 51 et 52 de la procédure de détermination sont mises en œuvre par le module de traitement (ici 110A) de la passerelle désignée (ici 11A) lors de l'étape 30. Les étapes 53 et 54 sont quant à elles mises en œuvre par le module de traitement 100 du serveur 10 à la suite de l'étape 41. La passerelle désignée est donc capable de déterminer sa fréquence centrale, et le serveur 10 est capable de fournir à la passerelle une modulation et un niveau d'émission. Le serveur 10 (par l'intermédiaire de son module de traitement 100) et la passerelle 11A (par l'intermédiaire de son module de traitement 110A) forment donc un système mettant en œuvre le procédé de configuration des paramètres de communication de la passerelle 11A.

Jusque-là nous avons considéré que le réseau LoRa 1 n'était pas perturbé par un autre réseau LoRa. Dans ce cas, la configuration des passerelles ne concerne que les passerelles d'un même réseau, ici les passerelles 11A et 11B du réseau LoRa 1. Toutefois, il est possible qu'au moins un autre réseau LoRa perturbe le réseau LoRa 1. Il peut être utile dans ce cas d'être capable d'identifier les passerelles appartenant à un même réseau. De cette manière, dans le mode de réalisation où les passerelles échangent des informations de géolocalisation, une passerelle capable d'identifier les passerelles appartenant au même réseau peut reconnaître les trames contenant des informations de géolocalisation provenant de passerelles du même réseau. Ainsi, les trames contenant des informations de géolocalisation provenant de passerelles du même réseau peuvent être décodées alors que les autres trames contenant des informations de géolocalisation sont rejetées. Dans un mode de réalisation, chaque passerelle d'un même réseau, par exemple les passerelles 11A et 11B du réseau 1, applique une procédure d'identification. Cette procédure d'identification peut par exemple être mise en œuvre lors de l'installation de la passerelle ou à intervalles réguliers. Lors de cette procédure d'identification chaque passerelle transmet en mode multidiffusion, une signature sous forme d'une série de trames vides. Chaque trame vide de ladite série est transmise avec un niveau d'émission prédéfini. Chaque trame vide peut par exemple être transmise avec un niveau d'émission choisi entre deux valeurs. Les deux valeurs du niveau d'émission peuvent par exemple être « +14 »dBm et « +5 »dBm. L'un des deux niveaux d'émission représente un « 1 » binaire alors que l'autre niveau d'émission représente un « 0 » binaire. La série de trames vides est donc représentative d'un mot binaire qu'une autre passerelle peut interpréter comme la signature de la passerelle ayant émis ladite série. En effet chaque passerelle recevant la série de trames vides, peut mesurer le niveau d'émission de chaque trame vide et en déduire le mot binaire associé. Dans ce mode de réalisation, chaque passerelle d'un même réseau LoRa connaît les signatures des autres passerelles du même réseau ou au moins des caractéristiques de ces signatures lui permettant de les reconnaître. Dans une variante de ce mode de réalisation, toutes les passerelles d'un même réseau LoRa ont la même signature. Ainsi, une passerelle est capable de déterminer, lorsqu'elle reçoit une série de trames vides, si la passerelle ayant émis ladite série appartient au même réseau LoRa qu'elle ou pas. Lorsqu'une première passerelle a été identifié par une seconde passerelle comme appartenant au même réseau LoRa qu'une seconde passerelle, la seconde passerelle sauvegarde l'adresse MAC de la première passerelle et associe cette adresse MAC à une information indiquant que la première et la seconde passerelles appartiennent au même réseau LoRa. De cette manière, à chaque fois que la seconde passerelle reçoit une trame contenant des informations de géolocalisation et comportant une adresse MAC correspondant à une passerelle appartenant au même réseau LoRa, elle récupère les informations de géolocalisation. Sinon, la deuxième passerelle rejette la trame. On note que dans ce mode de réalisation, toutes les trames échangées (trames vides et trames contenant des informations de géolocalisation) sont émises par des passerelles se faisant passer temporairement pour des terminaux.

**Revendications**

1. Procédé de configuration, dans un réseau sans fil à grande portée et permettant une faible consommation d'énergie basé sur la technologie LoRa, de paramètres de communication d'une passerelle (11A), dite première passerelle, désignée (41) par un serveur (10) dudit réseau (1) pour relayer des informations représentatives d'une réponse à une requête contenant des données reçue (40) par le serveur, les données provenant d'un terminal (12) dudit réseau, les informations représentatives d'une réponse étant transmises (43) par le serveur (10) et destinées au terminal (12), le procédé comprend lorsqu'il est mis en œuvre par la première passerelle :

   obtenir (30) des paramètres de communication entre ladite première passerelle (11A) et ledit terminal (12) ; et, configurer (31) la première passerelle (11A) de sorte à transmettre les informations représentatives d'une réponse en utilisant chaque paramètre de communication obtenu, les données provenant du terminal étant issues d'une trame, dite trame montante, transmise en mode multidiffusion par le terminal (12) et reçue par un ensemble de passerelles (11A, 11B) comprenant au moins la première passerelle (11A), et les informations représentatives d'une réponse sont transmises par la première passerelle (11A) au terminal (12) dans une trame, appelée trame descendante ;
   obtenir les paramètres de communication en appliquant une procédure de détermination comprenant :

   obtenir (50) au moins une information représentative d'une distance entre la première passerelle (11A) et au moins une seconde passerelle (11B) ; chaque information de distance étant déterminée à partir d'informations représentatives d'une géolocalisation de chaque seconde passerelle reçues par la première passerelle et ayant été transmise dans une trame par une seconde passerelle ayant mesuré ladite information de géolocalisation, ladite seconde passerelle se faisant passer temporairement pour un terminal pour transmettre ladite trame ; et,
   lorsqu'au moins une seconde passerelle est située à une distance de la première passerelle inférieure à une distance prédéfinie, déterminer (52, 53, 54) les paramètres de communication comprenant une fréquence centrale, ladite fréquence centrale étant déterminée en sélectionnant parmi un ensemble de fréquences centrales prédéfinies, une fréquence centrale ayant un écart avec des fréquences centrales utilisées par chaque seconde passerelle située à une distance de la première passerelle inférieure à la distance prédéfinie supérieur à un écart prédéfini.

2. Procédé selon la revendication 1, **caractérisé en ce que** les paramètres de communication comprennent en outre une modulation et/ou un niveau d'émission, et **en ce que** la modulation et/ou le niveau d'émission sont déterminés en utilisant des informations représentatives d'une qualité de réception mesurées lors de la réception de la trame montante par la première passerelle et comprenant une information représentative d'une indication de puissance d'un signal reçu *RSSI* et une information de rapport signal sur bruit *SNR.*

3. Procédé selon la revendication 2, **caractérisé en ce qu'**une détermination de la modulation consiste à sélectionner parmi un ensemble de modulations, chaque modulation dudit ensemble étant associée à un débit binaire, une sensibilité de réception minimale admissible et un rapport signal sur bruit minimum acceptable, une modulation associée au débit binaire le plus élevé possible et vérifiant chaque critère parmi un premier et un second critère, le premier critère étant tel que l'information représentative d'une indication de puissance d'un signal reçu *RSSI* doit être telle que :

$$RSSI \geq (S + C_{RSSI})$$

où *S* est la sensibilité de réception minimale admissible associée à ladite modulation et $C_{RSSI}$ est une première constante prédéfinie et le second critère étant tel que l'information de rapport signal sur bruit *SNR* doit être telle que :

$$SNR \geq (A + C_{SNR})$$

où $A$ est le rapport signal sur bruit minimum acceptable associée à ladite modulation et $C_{SNR}$ est une deuxième constante prédéfinie.

4. Procédé selon la revendication 3, **caractérisé en ce que**, lorsqu'une modulation a pu être sélectionnée, le niveau d'émission *POWE* est déterminé de la manière suivante :

$$POWE = \max\left( N_{max} - \min\left((SNR - (A + C_{SNR}), \left(RSSI - (S + C_{RSSI})\right)\right), N_{min}\right)$$

où $N_{max}$ est un niveau d'émission maximal prédéfini, $N_{min}$ est un niveau d'émission minimal prédéfini, *min(x,y)* est une fonction prenant le minimum entre une valeur *x* et une valeur *y*, *max(x,y)* est une fonction prenant le maximum entre la valeur *x* et la valeur *y*.

5. Procédé selon l'une des revendications 2 à 4, **caractérisé en ce que**, préalablement à la transmission de la trame comprenant une information de géolocalisation, la seconde passerelle devant transmettre ladite trame a mis en œuvre une procédure d'identification lui permettant de s'identifier auprès d'autres passerelles appartenant audit réseau comprenant la première passerelle, ladite procédure d'identification étant basée sur une transmission d'une signature représentative de ladite passerelle et reconnaissable par chaque passerelle dudit réseau sous forme d'une série de trames vides prédéfinie, chaque trame vide étant transmise avec un niveau d'émission prédéfinie.

6. Procédé selon l'une quelconque des revendications 1 à 5 **caractérisé en ce que** des paramètres de communication sont obtenus pour chaque trame montante transmise par le terminal et relayée par la première passerelle ou à intervalles réguliers, une durée de chaque intervalle pouvant être fixe ou adaptée en fonction de statistiques sur une vitesse de variation de caractéristiques d'une bande de fréquence utilisée par ledit réseau.

7. Système comprenant une première passerelle (11A), au moins une seconde passerelle (11B) et un serveur connectés par un réseau sans fil à grande portée et permettant une faible consommation d'énergie basé sur la technologie LoRa, la première passerelle ayant été désignée (41) par le serveur (10) pour relayer des informations représentatives d'une réponse à une requête contenant des données reçues (40) par le serveur, lesdites données provenant d'un terminal (12) dudit réseau, les informations représentatives d'une réponse étant transmises (43) par le serveur (10) et destinées au terminal (12), la première passerelle (11A) comprend:

des moyens d'obtention pour obtenir (30) des paramètres de communication entre ladite première passerelle (11A) et ledit terminal (12) ; et,
des moyens de configuration pour configurer (31) la première passerelle (11A) de sorte à transmettre les informations représentatives d'une réponse en utilisant chaque paramètre de communication obtenu, les données provenant du terminal étant issues d'une trame, dite trame montante, transmise en mode multidiffusion par le terminal (12) et reçue par un ensemble de passerelles (11A, 11B) comprenant au moins la première passerelle (11A), et les informations représentatives d'une réponse sont transmises par la première passerelle (11A) au terminal (12) dans une trame, appelée trame descendante ;
des moyens pour exécuter une procédure de détermination comprenant :

des moyens pour obtenir (50) au moins une information représentative d'une distance entre la première passerelle (11A) et au moins une seconde passerelle (11B) ; chaque information de distance étant déterminée à partir d'informations représentatives d'une géolocalisation de chaque seconde passerelle reçues par la première passerelle et ayant été transmise dans une trame par une seconde passerelle ayant mesuré ladite information de géolocalisation, ladite seconde passerelle se faisant passer temporairement pour un terminal pour transmettre ladite trame ; et,
des moyens de détermination pour déterminer (52, 53, 54) les paramètres de communication comprenant une fréquence centrale, ladite fréquence centrale étant déterminée en sélectionnant parmi un ensemble de fréquences centrales prédéfinies, une fréquence centrale ayant un écart avec des fréquences centrales utilisées par chaque seconde passerelle située à une distance de la première passerelle inférieure à la distance prédéfinie supérieur à un écart prédéfini.

8. Programme d'ordinateur, **caractérisé en ce qu'**il comprend des instructions pour mettre en œuvre, par un dispositif (110A), le procédé selon l'une quelconque des revendications 1 à 6, lorsque ledit programme est exécuté par un processeur dudit dispositif (110A).

9. Moyens de stockage, **caractérisés en ce qu'**ils stockent un programme d'ordinateur comprenant des instructions pour mettre en œuvre, par un dispositif ( 110A), le procédé selon l'une quelconque des revendications 1 à 6, lorsque ledit programme est exécuté par un processeur dudit dispositif (110A).

**Patentansprüche**

1. Verfahren zur Konfiguration, in einem auf der LoRa-Technologie beruhenden drahtlosen Niedrigenergieweitverkehrsnetz, von Kommunikationsparametern eines Gateways (11A), erstes Gateway genannt, das von einem Server (10) des Netzes (1) benannt (41) wird, um Informationen weiterzuleiten, die für eine Antwort auf eine Daten enthaltende Anforderung repräsentativ sind, die vom Server empfangen (40) wird, wobei die Daten von einem Endpunkt (12) des Netzes kommen, wobei die für eine Antwort repräsentativen Informationen vom Server (10) übertragen (43) werden und für den Endpunkt (12) bestimmt sind, wobei das Verfahren bei der Ausführung durch das erste Gateway Folgendes umfasst:

   Erhalten (30) der Kommunikationsparameter zwischen dem ersten Gateway (11A) und dem Endpunkt (12); und Konfigurieren (31) des ersten Gateways (11A) derart, dass die Informationen, die für eine Antwort repräsentativ sind, übertragen werden, indem jeder erhaltene Kommunikationsparameter verwendet wird, wobei die vom Endpunkt kommenden Daten aus einem Rahmen stammen, Uplink-Rahmen genannt, der vom Endpunkt (12) im Broadcast-Modus übertragen wird und von einer Menge von Gateways (11A, 11B) empfangen wird, die mindestens das erste Gateway (11A) umfasst, und die Informationen, die für eine Antwort repräsentativ sind, vom ersten Gateway (11A) an den Endpunkt (12) in einem Rahmen, Downlink-Rahmen genannt, übertragen werden; Erhalten der Kommunikationsparameter in Anwendung eines Bestimmungsverfahrens, das Folgendes umfasst:

   Erhalten (50) mindestens einer Information, die für eine Entfernung zwischen dem ersten Gateway (11A) und mindestens meinem zweiten Gateway (11B) repräsentativ ist; wobei jede Entfernungsinformation anhand von Informationen bestimmt wird, die für eine Geolokalisierung jedes zweiten Gateways repräsentativ sind, die vom ersten Gateway empfangen werden und in einem Rahmen von einem zweiten Gateway gesendet worden sind, das die Geolokalisierungsinformation gemessen hat, wobei sich das zweite Gateway vorübergehend für einen Endpunkt ausgibt, um den Rahmen zu übertragen; und, wenn mindestens ein zweites Gateway in einer Entfernung vom ersten Gateway liegt, die geringer als eine vorgegebene Entfernung ist, Bestimmen (52, 53, 54) der Kommunikationsparameter, die eine Mittenfrequenz umfassen, wobei die Mittenfrequenz bestimmt wird, indem aus einer Menge von vorgegebenen Mittenfrequenzen eine Mittenfrequenz ausgewählt wird, die einen Abstand zu den Mittenfrequenzen aufweist, die von jedem in einer geringeren als der vorgegebenen Entfernung vom ersten Gateway gelegenen zweiten Gateway verwendet werden, der größer als ein vorgegebener Abstand ist.

2. Verfahren nach Anspruch 1, **dadurch gekennzeichnet, dass** die Kommunikationsparameter ferner eine Modulation und/oder einen Sendepegel umfassen und dass die Modulation und/oder der Sendepegel bestimmt werden, indem Informationen verwendet werden, die für eine Empfangsqualität repräsentativ sind, die beim Empfangen des Uplink-Rahmens durch das erste Gateway gemessen werden und eine Information, die für einen Indikator für die Empfangssignalstärke *RSSI* repräsentativ ist, und eine Information zum Störabstand *SNR* umfassen.

3. Verfahren nach Anspruch 2, **dadurch gekennzeichnet, dass** eine Bestimmung der Modulation darin besteht, aus einer Menge von Modulationen, wobei jede Modulation dieser Gruppe einer Bitrate, einer kleinsten zulässigen Empfangsempfindlichkeit und einem kleinsten annehmbaren Störabstand zugeordnet ist, eine Modulation auszuwählen, die der höchstmöglichen Bitrate zugeordnet ist und jedes Kriterium unter einem ersten und einem zweiten Kriterium erfüllt, wobei das erste Kriterium derart ist, dass die Information, die für einen Indikator für die Empfangssignalstärke *RSSI* repräsentativ ist, derart sein muss, dass:

$$RSSI \geq (S + C_{RSSI})$$

worin S die kleinste zulässige Empfangsempfindlichkeit ist, die der Modulation zugeordnet ist, und $C_{RSSI}$ eine erste vorgegebene Konstante ist, und wobei das zweite Kriterium derart ist, dass die Information zum Störabstand *SNR* derart sein muss, dass:

$$SNR \geq (A + C_{SNR})$$

worin *A* der kleinste annehmbare Störabstand ist, welcher der Modulation zugeordnet ist, und $C_{SNR}$ eine zweite vorgegebene Konstante ist.

4. Verfahren nach Anspruch 3, **dadurch gekennzeichnet, dass**, wenn eine Modulation ausgewählt werden konnte, der Sendepegel *POWE* auf die folgende Weise bestimmt wird:

$$POWE = max(N_{max} - min((SNR - (A + C_{SNR}), (RSSI - (S + C_{RSSI})), N_{min})$$

worin $N_{max}$ ein vorgegebener maximaler Sendepegel ist, $N_{min}$ ein vorgegebener minimaler Sendepegel ist, *min(x,y)* eine Funktion ist, die das Minimum zwischen einem Wert *x* und einem Wert *y* nimmt, *max(x,y)* eine Funktion ist, die das Maximum zwischen dem Wert *x* und dem Wert *y* nimmt.

5. Verfahren nach einem der Ansprüche 2 bis 4, **dadurch gekennzeichnet, dass** vor dem Übertragen des Rahmens, der eine Geolokalisierungsinformation umfasst, das zweite Gateway, das diesen Rahmen übertragen soll, ein Identifizierungsverfahren ausgeführt hat, das es ihm ermöglicht, sich bei anderen Gateways zu identifizieren, die dem das erste Gateway umfassenden Netz angehören, wobei das Identifizierungsverfahren auf einer Übertragung einer Signatur, die für das Gateway repräsentativ ist und von jedem Gateway des Netzes erkennbar ist, in Form einer vorgegebenen Reihe leerer Rahmen beruht, wobei jeder leere Rahmen mit einem vorgegebenen Sendepegel übertragen wird.

6. Verfahren nach einem der Ansprüche 1 bis 5, **dadurch gekennzeichnet, dass** Kommunikationsparameter für jeden Uplink-Rahmen erhalten werden, der vom Endpunkt übertragen wird und vom ersten Gateway weiterleitet wird, oder in regelmäßigen Intervallen, wobei eine Dauer jedes Intervall feststehend sein kann oder in Abhängigkeit von Statistiken über eine Änderungsgeschwindigkeit von Merkmalen eines von dem Netz verwendeten Frequenzbandes angepasst werden kann.

7. System, umfassend ein erstes Gateway (11A), mindestens ein zweites Gateway (11B) und einen Server, die über ein auf der LoRa-Technologie beruhendes drahtloses Niedrigenergieweitverkehrsnetz verbunden sind, wobei das erste Gateway vom Server (10) benannt (41) wurde, um Informationen weiterzuleiten, die für eine Antwort auf eine Anforderung repräsentativ sind, die Daten enthält, die vom Server empfangen (40) werden, wobei die Daten von einem Endpunkt (12) des Netzes kommen, wobei die Informationen, die für eine Antwort repräsentativ sind, vom Server (10) übertragen werden (43) und für den Endpunkt (12) bestimmt sind, das erste Gateway (11A) umfasst:

Mittel zum Erhalten (30), um Kommunikationsparameter zwischen dem ersten Gateway (11A) und dem Endpunkt (12) zu erhalten; und
Konfigurationsmittel, um das erste Gateway (11A) so zu konfigurieren (31), dass die Informationen übertragen werden, die für eine Antwort repräsentativ sind, indem jeder erhaltene Kommunikationsparameter verwendet wird, wobei die vom Endpunkt kommenden Daten aus einem Rahmen stammen, Uplink-Rahmen genannt, der vom Endpunkt (12) im Broadcast-Modus übertragen wird und von einer Menge von Gateways (11A, 11B) empfangen wird, die mindestens das erste Gateway (11A) umfasst, und die Informationen, die für eine Antwort repräsentativ sind, vom ersten Gateway (11A) an den Endpunkt (12) in einem Rahmen, Downlink-Rahmen genannt, übertragen werden;
Mittel, um ein Bestimmungsverfahren auszuführen, umfassend:

Mittel, um mindestens eine Information zu erhalten (50), die für eine Entfernung zwischen dem ersten Gateway (11A) und mindestens meinem zweiten Gateway (11B) repräsentativ ist; wobei jede Entfernungsinformation anhand von Informationen bestimmt wird, die für eine Geolokalisierung jedes zweiten Gateways repräsentativ sind, die vom ersten Gateway empfangen werden und in einem Rahmen von einem zweiten Gateway übertragen wurden, das die Geolokalisierungsinformation gemessen hat, wobei das zweite Gateway sich vorübergehend für einen Endpunkt ausgibt, um den Rahmen zu übertragen; und Bestimmungsmittel, um die Kommunikationsparameter zu bestimmen (52, 53, 54), die eine Mittenfrequenz umfassen, wobei die Mittenfrequenz bestimmt wird, indem unter einer Gruppe von vorgegebenen Mittenfrequenzen eine Mittenfrequenz ausgewählt wird, die einen Abstand zu den Mittenfrequenzen aufweist, die von jedem in einer geringeren als der vorgegebenen Entfernung vom ersten Gateway gelegenen zweiten Gateway verwendet werden, der größer als ein vorgegebener Abstand ist.

8. Computerprogramm, **dadurch gekennzeichnet, dass** es Befehle umfasst, die eine Vorrichtung (110A) bei der Ausführung des Programms durch einen Prozessor einer Vorrichtung (110A) veranlassen, das Verfahren nach einem der Ansprüche 1 bis 6 auszuführen.

9. Speichermedien, **dadurch gekennzeichnet, dass** sie ein Computerprogramm speichern, das Befehle umfasst, die eine Vorrichtung (110A) bei der Ausführung des Programms durch einen Prozessor dieser Vorrichtung (110A) veranlassen, das Verfahren nach einem der Ansprüche 1 bis 6 auszuführen.

## Claims

1. A method for configuring, in a low-power wide-area wireless network based on LoRa technology, communication parameters for a gateway (11A), termed first gateway, designated (41) by a server (10) of said network (1) to relay information representative of a response to a request, containing data, received (40) by the server, the data originating from a terminal (12) of said network, the information representative of a response being transmitted (43) by the server (10) and intended for the terminal (12), the method comprises, when it is implemented by the first gateway:

   acquiring (30) parameters for communication between said first gateway (11A) and said terminal (12); and, configuring (31) the first gateway (11A) so as to transmit the information representative of a response using each communication parameter acquired, the data originating from the terminal coming from a frame, termed uplink frame, that is transmitted in multicast mode by the terminal (12) and received by a set of gateways (11A, 11B) comprising at least the first gateway (11A), and the information representative of a response is transmitted by the first gateway (11A) to the terminal (12) in a frame, called downlink frame;
   acquiring the communication parameters by applying a determination procedure comprising:

      acquiring (50) at least one item of information representative of a distance between the first gateway (11A) and at least one second gateway (11B); each item of distance information being determined on the basis of information representative of a geographical location of each second gateway received by the first gateway and having been transmitted in a frame by a second gateway that has measured said item of geographical location information, said second gateway temporarily acting as a terminal to transmit said frame; and, when at least one second gateway is situated at a distance from the first gateway that is shorter than a predefined distance, determining (52, 53, 54) the communication parameters comprising a central frequency, said central frequency being determined by selecting, from among a set of predefined central frequencies, a central frequency having a gap between central frequencies, which are used by each second gateway situated at a distance from the first gateway that is shorter than the predefined distance, larger than a predefined gap.

2. The method as claimed in claim 1, **characterized in that** the communication parameters furthermore comprise a modulation and/or a transmit level, and **in that** the modulation and/or the transmit level are determined using information representative of a quality of reception, which information is measured when the uplink frame is received by the first gateway, and comprising an item of information representative of a received signal strength indication *RSSI* and an item of signal-to-noise ratio *SNR* information.

3. The method as claimed in claim 2, **characterized in that** determination of the modulation consists in selecting, from among a set of modulations, each modulation of said set being associated with a bit rate, a minimum admissible reception sensitivity and a minimum acceptable signal-to-noise ratio, a modulation associated with the highest possible bit rate and meeting each criterion from among a first and a second criteria, the first criterion being such that the item of information representative of a received signal strength indication *RSSI* has to be such that:

$$RSSI \geq (S + C_{RSSI})$$

where $S$ is the minimum admissible reception sensitivity associated with said modulation and $C_{RSSI}$ is a first predefined constant and the second criterion being such that the item of signal-to-noise ratio $SNR$ information has to be such that:

$$SNR \geq (A + C_{SNR})$$

where $A$ is the minimum acceptable signal-to-noise ratio associated with said modulation and $C_{SNR}$ is a second predefined constant.

4. The method as claimed in claim 3, **characterized in that**, when a modulation has been able to be selected, the transmit level *POWE* is determined in the following way:

$$POWE = \max(\, N_{max} - \min\,((SNR - (A + C_{SNR}), (RSSI - (S + C_{RSSI})), N_{min})$$

where $N_{max}$ is a predefined maximum transmit level, $N_{min}$ is a predefined minimum transmit level, *min(x,y)* is a function taking the minimum between a value *x* and a value *y, max(x,y)* is a function taking the maximum between the value *x* and the value *y.*

5. The method as claimed in one of claims 2 to 4, **characterized in that**, prior to the transmission of the frame comprising an item of geographical location information, the second gateway that has to transmit said frame has implemented an identification procedure enabling it to identify itself to other gateways belonging to said network comprising the first gateway, said identification procedure being based on a transmission of a signature representative of said gateway and able to be recognized by each gateway of said network in the form of a predefined series of empty frames, each empty frame being transmitted with a predefined transmit level.

6. The method as claimed in any one of claims 1 to 5, **characterized in that** communication parameters are acquired for each uplink frame transmitted by the terminal and relayed by the first gateway or at regular intervals, a duration of each interval being able to be set or adjusted depending on statistics regarding a rate of variation of characteristics of a frequency band used by said network.

7. A system comprising a first gateway (11A), at least one second gateway (11B) and a server that are connected by a low-power wide-area wireless network based on LoRa technology, the first gateway having been designated (41) by the server (10) to relay information representative of a response to a request, containing data, received (40) by the server, said data originating from a terminal (12) of said network, the information representative of a response being transmitted (43) by the server (10) and intended for the terminal (12), the first gateway (11A) comprises:

acquisition means for acquiring (30) parameters for communication between said first gateway (11A) and said terminal (12); and,
configuration means for configuring (31) the first gateway (11A) so as to transmit the information representative of a response using each communication parameter acquired, the data originating from the terminal coming from a frame, termed uplink frame, that is transmitted in multicast mode by the terminal (12) and received by a set of gateways (11A, 11B) comprising at least the first gateway (11A), and the information representative of a response is transmitted by the first gateway (11A) to the terminal (12) in a frame, called downlink frame;
means for executing a determination procedure comprising:

means for acquiring (50) at least one item of information representative of a distance between the first gateway (11A) and at least one second gateway (11B); each item of distance information being determined on the basis of information representative of a geographical location of each second gateway received by the first gateway and having been transmitted in a frame by a second gateway that has measured said item of geographical location information, said second gateway temporarily acting as a terminal to transmit said frame; and,
determination means for determining (52, 53, 54) the communication parameters comprising a central frequency, said central frequency being determined by selecting, from among a set of predefined central frequencies, a central frequency having a gap between central frequencies, which are used by each second gateway situated at a distance from the first gateway that is shorter than the predefined distance, larger than a predefined gap.

8. A computer program, **characterized in that** it comprises instructions for the implementation, by a device (110A), of the method as claimed in any one of claims 1 to 6 when said program is executed by a processor of said device (110A).

9. Storage means, **characterized in that** they store a computer program comprising instructions for the implementation, by a device (110A), of the method as claimed in any one of claims 1 to 6 when said program is executed by a processor of said device (110A).

Fig. 1

Fig. 2A

Fig. 2B

30 ⋁ | Obtenir paramètres de communication

31 ⋁ | Configuration passerelle

## Fig. 3A

40 ⋁ | Réception requête(s) montante(s)

41 ⋁ | Désignation de la passerelle

42 ⋁ | Procédure de détermination

43 ⋁ | Transmission requête descendante

## Fig. 3B

50 ⋁ | Obtention distance(s) entre passerelle(s)

51 ⋁ | Distance(s) $< D_{max}$

52 ⋁ | Obtention fréquence centrale

53 ⋁ | Obtention modulation

54 ⋁ | Obtention du niveau d'émission

43

## Fig. 3C

Fig. 4A

Fig. 5A

Fig. 4B

Fig. 5B

Fig. 4C

Fig. 5C

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0709983 A

**Littérature non-brevet citée dans la description**

- LoRa MAC specification. *ETSI draft,* 16 Janvier 2014